# EUROPEAN PATENT APPLICATION

(11) **EP 3 716 462 A1**
(43) Date of publication of application: **30.09.2020**
(21) Application number: 17933033.7
(22) Date of filing: 22.11.2017
(51) Int. Cl.: H02M 7/48, H02J 3/36

(54) **POWER CONVERSION SYSTEM**

(71) Applicant: Toshiba Mitsubishi-Electric Industrial Systems Corporation, Tokyo 104-0031 (JP); Toshiba Infrastructure Systems & Solutions Corporation, Kawasaki-shi, Kanagawa 212-8585 (JP)
(72) Inventor: HOSHINA, Shunichirou, Tokyo 104-0031 (JP); AOYAMA, Fumio, Tokyo 104-0031 (JP); SATAKE, Nobuhiko, Kawasaki Kanagawa 212-8585 (JP)
(74) Representative: Winter, Brandl, Fürniss, Hübner, Röss, Kaiser, Polte - Partnerschaft mbB
(86) International application number: PCT/JP2017/042021
(87) International publication number: WO 2019/102547

(57) **Abstract**

According to an embodiment of the invention, a power conversion system including a main circuit and a control circuit is provided. The main circuit includes a power converter and an electrical storage part. The power converter includes a pair of direct current terminals connected to a direct current circuit, multiple alternating current terminals connected to an alternating current circuit, multiple switching elements having a full-bridge connection, and multiple rectifying elements connected in anti-parallel respectively to the multiple switching elements. The electrical storage part is connected to each of the multiple alternating current terminals via multiple reactors and is connected to one of the pair of direct current terminals. The control circuit controls, by an ON/OFF of the multiple switching elements, a power flow in three directions between the direct current circuit, the alternating current circuit, and the electrical storage part.

## Description

### [Field]

Embodiments described herein relate generally to a power conversion system.

### [Background Art]

There is a power conversion system controlling a power flow between a direct current circuit, an alternating current circuit, and an electrical storage part (e.g., see Patent Literature 1 and 2). For example, the power conversion system is used in an electric railway power system, a solar power generation system, or the like.

For example, in an electric railway power system, alternating current power of an alternating current power system is converted into direct current power, and direct current power is supplied to a direct current feed system. Also, when a vehicle regenerates, the regenerative power is stored in an electrical storage part; when the vehicle is being powered, the direct current power that is stored in the electrical storage part is supplied to the direct current feed system. Thereby, the effective use of the regenerative power can be realized, the reverse power flow into the alternating current power system can be prevented, and voltage fluctuation and the like can be suppressed.

For example, in a solar power generation system, the direct current power that is generated by a solar cell is converted into alternating current power, and the alternating current power is supplied to an alternating current power system and/or an alternating current load. Also, the excess direct current power is stored in an electrical storage part, and when the demand of the alternating current load increases, etc., the direct current power that is stored in the electrical storage part is converted into alternating current power and supplied to the alternating current load or the like. Thereby, the unbalance between the generated power and the demand power can be suppressed while maximizing the generated power amount.

A conventional power conversion system includes multiple power converters including a power converter controlling the power flow between the direct current circuit and the alternating current circuit, a power converter controlling the power flow between the direct current circuit and the electrical storage part, or a power converter controlling the power flow between the alternating current circuit and the electrical storage part. For example, a power conversion system according to Patent Literature 1 and 2 includes the multiple power converters of a power converter controlling the power flow between the direct current circuit and the alternating current circuit and a power converter controlling the power flow between the direct current circuit and the electrical storage part; to control the power flow between the alternating current circuit and the electrical storage part, it is necessary to go through the multiple power converters. Thus, to control the power flow between the direct current circuit, the alternating current circuit, and the electrical storage part in three directions, it is necessary to include multiple power converters, which may cause a larger size of the device and a cost increase. Therefore, in the power conversion system, it is desirable to use a simpler configuration and to suppress the size increase of the device and the cost increase.

### [Prior Art Documents]

### [Patent Documents]

[Patent Document 1]
   Japanese Patent No. 5398433
[Patent Document 2]
   Japanese Patent No. 3934518

### [Summary of Invention]

### [Problem to be Solved by the Invention]

An embodiment of the invention provides a power conversion system having a simple configuration.

### [Means for Solving the Problem]

According to an embodiment of the invention, a power conversion system including a main circuit and a control circuit is provided. The main circuit includes a power converter and an electrical storage part. The power converter includes a pair of direct current terminals connected to a direct current circuit, multiple alternating current terminals connected to an alternating current circuit, multiple switching elements having a full-bridge connection, and multiple rectifying elements connected in anti-parallel respectively to the multiple switching elements. The electrical storage part is connected to each of the multiple alternating current terminals via multiple reactors and is connected to one of the pair of direct current terminals. The control circuit controls, by an ON/OFF of the multiple switching elements, a power flow in three directions between the direct current circuit, the alternating current circuit, and the electrical storage part.

### [Effects of the Invention]

According to an embodiment of the invention, a power conversion system that has a simple configuration is provided.

### [Brief Description of Drawings]

[Fig. 1]

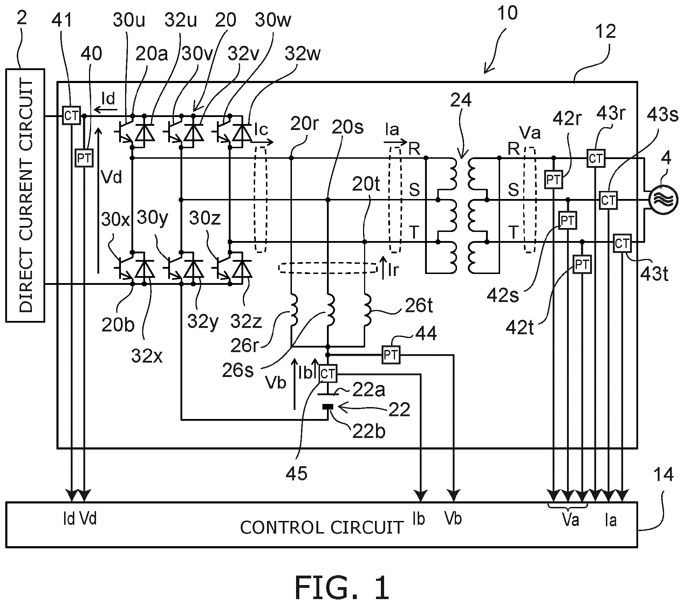

   FIG. 1 is a block diagram schematically illustrating a power conversion system according to a first embodiment.
[Fig. 2]

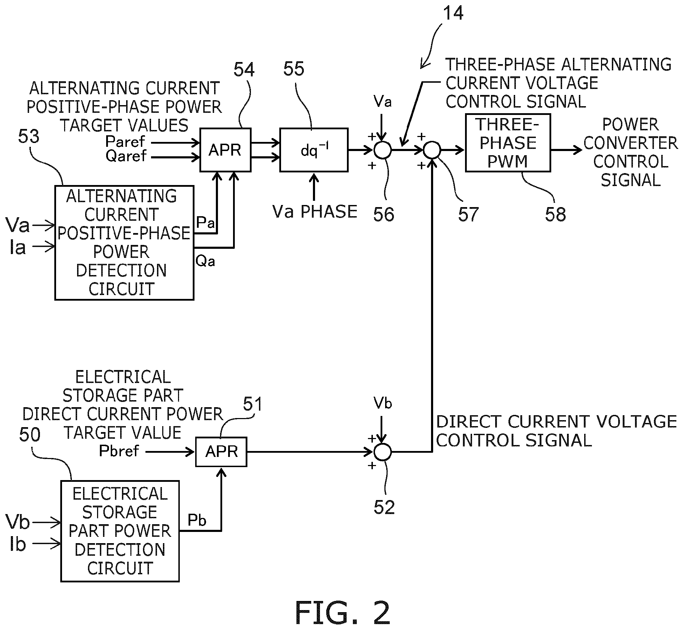

   FIG. 2 is a block diagram schematically illustrating an example of the control circuit according to the first embodiment.
[Fig. 3]

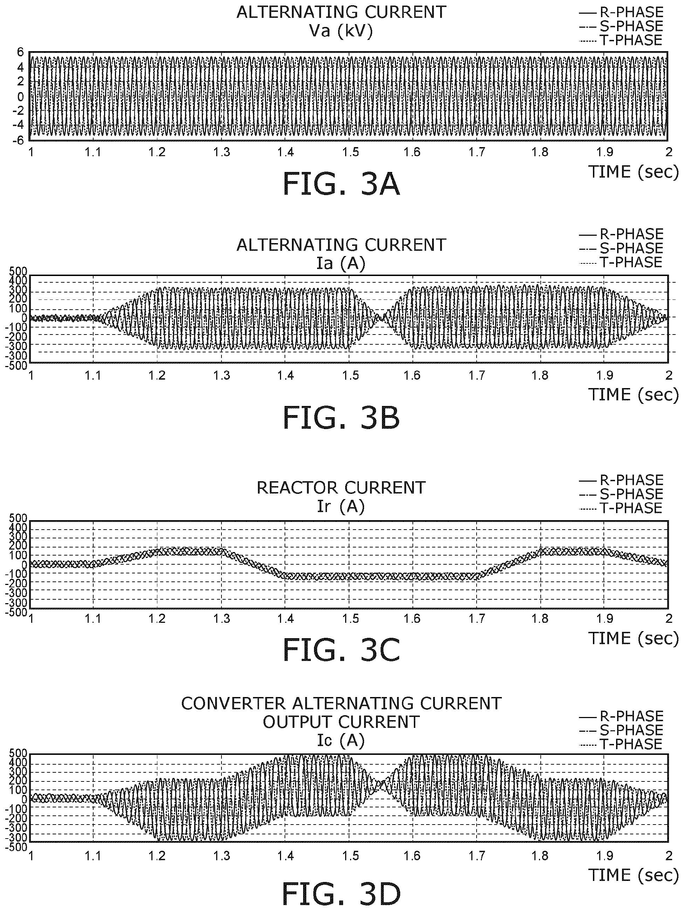

   FIG. 3A to FIG. 3D are graphs schematically illustrating an example of simulation results of the power conversion system according to the first embodiment.
[Fig. 4]

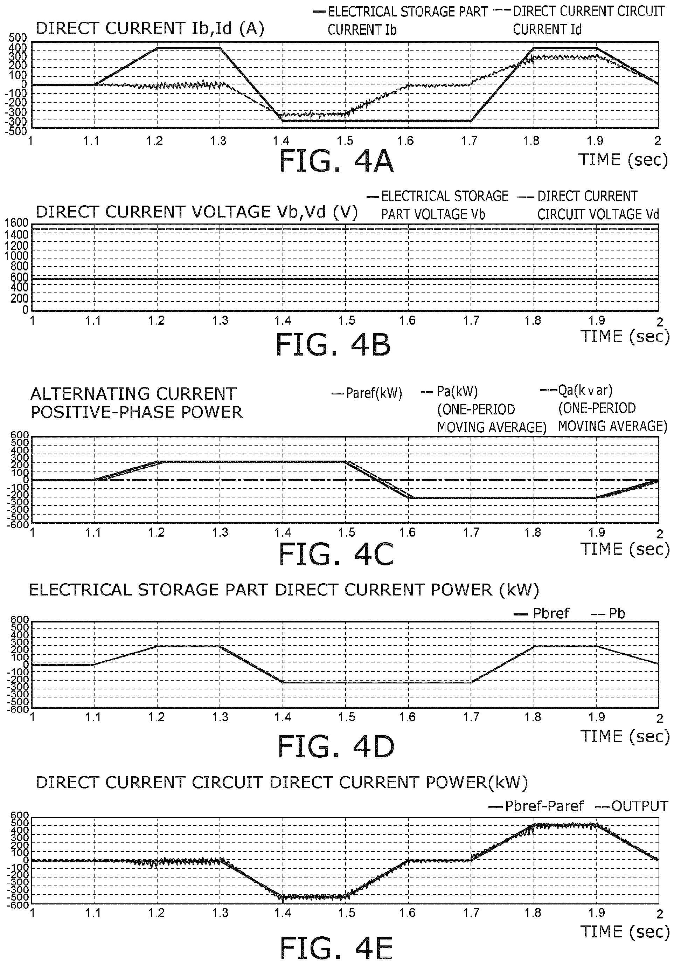

   FIG. 4A to FIG. 4E are graphs schematically illustrating an example of simulation results of the power conversion system according to the first embodiment.
[Fig. 5]

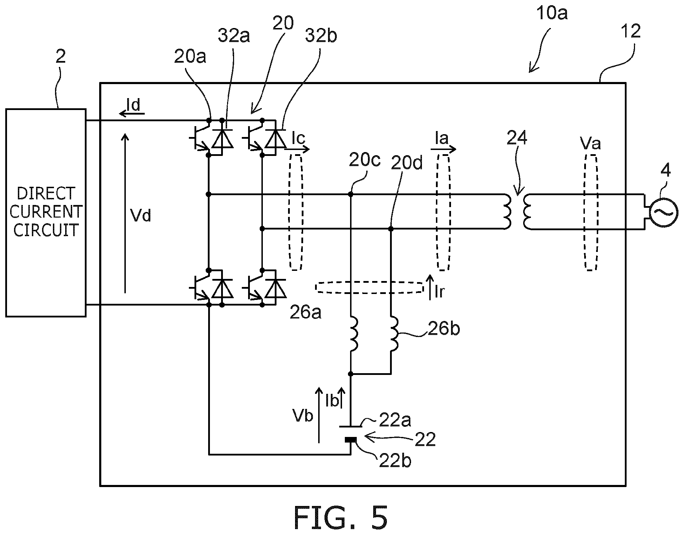

   FIG. 5 is a block diagram schematically illustrating a modification of the power conversion system according to the first embodiment.
[Fig. 6]

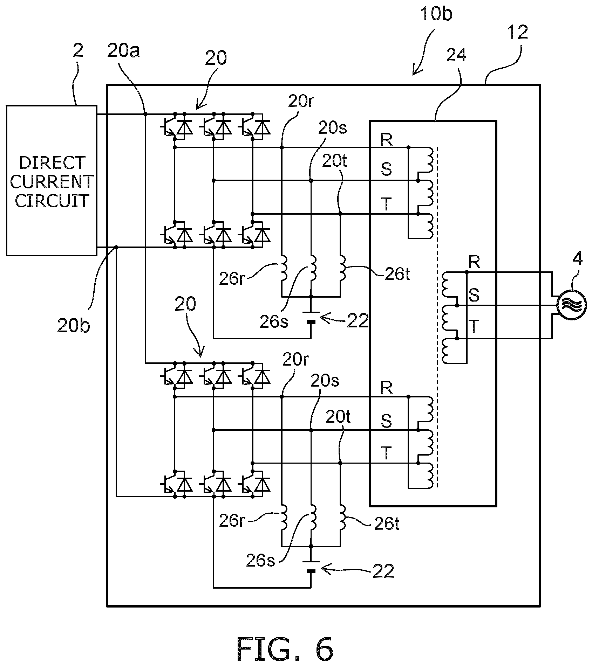

   FIG. 6 is a block diagram schematically illustrating a modification of the power conversion system according to the first embodiment.
[Fig. 7]

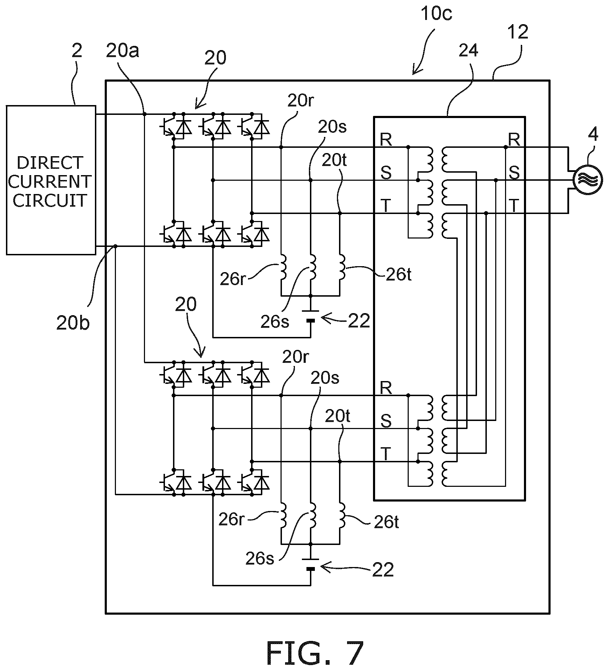

   FIG. 7 is a block diagram schematically illustrating a modification of the power conversion system according to the first embodiment.
[Fig. 8]

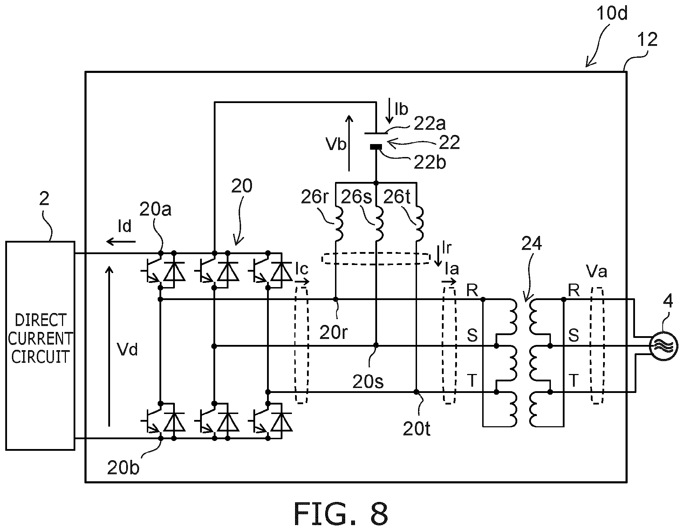

   FIG. 8 is a block diagram schematically illustrating a modification of the power conversion system according to the first embodiment.
[Fig. 9]

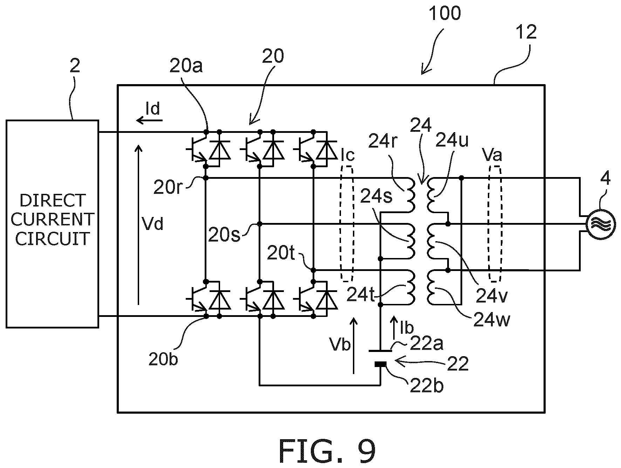

   FIG. 9 is a block diagram schematically illustrating a power conversion system according to a second embodiment.
[Fig. 10]

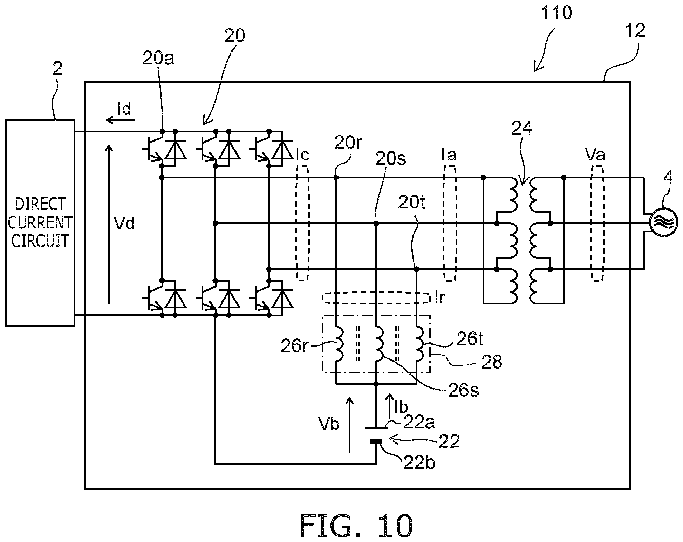

   FIG. 10 is a block diagram schematically illustrating a power conversion system according to a third embodiment.

### [Description of Embodiments]

Embodiments will now be described with reference to the drawings.

In the specification and drawings, components similar to those described previously or illustrated in an antecedent drawing are marked with the same reference numerals, and a detailed description is omitted as appropriate.

### (First embodiment)

FIG. 1 is a block diagram schematically illustrating a power conversion system according to a first embodiment.

As illustrated in FIG. 1, the power conversion system 10 includes a main circuit 12 and a control circuit 14. The main circuit 12 includes a power converter 20 and an electrical storage part 22.

The power converter 20 includes a pair of direct current terminals 20a and 20b and multiple alternating current terminals 20r, 20s, and 20t. The power converter 20 is connected to a direct current circuit 2 via the direct current terminals 20a and 20b. Also, the power converter 20 is connected to an alternating current circuit 4 via the alternating current terminals 20r, 20s, and 20t. In the example, the power converter 20 is connected to the alternating current circuit 4 via a transformer 24. The transformer 24 is provided between the power converter 20 and the alternating current circuit 4. Here, for simplification, the transformation ratio of the transformer 24 is taken to be 1. Although the transformer 24 may be provided as necessary, the transformer 24 may be replaced with an alternating current reactor.

The direct current circuit 2 is, for example, a direct current power system such as a direct current feed system used in an electric railway, etc., a direct current power generation component such as a solar cell system, etc. The direct current terminal 20a is connected to the high potential side of the direct current circuit 2. The direct current terminal 20b is connected to the low potential side of the direct current circuit 2. In other words, the direct current terminal 20a is a high-potential direct current terminal; in other words, the direct current terminal 20b is a low-potential direct current terminal.

The alternating current circuit 4 is, for example, an alternating current power system. The alternating current circuit 4 may be, for example, an alternating current load such as an induction motor, etc. In the example, the alternating current power of the alternating current circuit 4 is three-phase alternating current power. Accordingly, the power converter 20 includes the three alternating current terminals 20r, 20s, and 20t. The alternating current power of the alternating current circuit 4 may be single-phase alternating current power. In such a case, there may be two alternating current terminals provided in the power converter 20.

The electrical storage part 22 includes a positive pole 22a and a negative pole 22b. The positive pole 22a of the electrical storage part 22 is connected to the alternating current terminals 20r, 20s, and 20t via reactors 26r, 26s, and 26t. The negative pole 22b of the electrical storage part 22 is connected to the direct current terminal 20b at the low potential side of the power converter 20. For example, a secondary cell, a capacitor, etc., are used in the electrical storage part 22.

The power converter 20 includes the multiple switching elements 30u, 30v, 30w, 30x, 30y, and 30z having a full-bridge connection, and multiple rectifying elements 32u, 32v, 32w, 32x, 32y, and 32z connected in anti-parallel respectively to the switching elements 30u, 30v, 30w, 30x, 30y, and 30z.

In the example, the power converter 20 includes the six switching elements 30u, 30v, 30w, 30x, 30y, and 30z having a three-phase bridge connection, and the six rectifying elements 32u, 32v, 32w, 32x, 32y, and 32z. In the example, the power converter 20 is a so-called three-phase inverter.

The switching elements 30u, 30v, 30w, 30x, 30y, and 30z each include a pair of major terminals and a control terminal. The switching elements 30u, 30v, 30w, 30x, 30y, and 30z each control a current flowing between the major terminals due to a signal (a voltage) input to the control terminal. In other words, an ON-state in which a current flows between the major terminals and an OFF-state in which a current substantially does not flow between the major terminals are switched. The control terminal is a so-called gate terminal.

For example, self arc-extinguishing type switching elements are used as the switching elements 30u, 30v, 30w, 30x, 30y, and 30z. The switching elements 30u, 30v, 30w, 30x, 30y, and 30z are, for example, IGBTs (Insulated Gate Bipolar Transistors). The switching elements 30u, 30v, 30w, 30x, 30y, and 30z may be other self arc-extinguishing type switching elements.

For example, diodes are used as the rectifying elements 32u, 32v, 32w, 32x, 32y, and 32z. The rectifying elements 32u, 32v, 32w, 32x, 32y, and 32z are so-called reflux diodes.

For example, the power converter 20 generates three-phase balanced alternating current voltage and transfers the electrical power to the alternating current circuit 4. Also, the power converter 20 causes each of the alternating current terminals 20r, 20s, and 20t to generate direct current voltages having substantially equal magnitudes, and transfers the direct current power to the electrical storage part 22. When viewed from the three-phase alternating current system (the alternating current circuit 4), the direct current power is zero-phase power. Also, the direct current voltage that is generated by the power converter 20 is a zero-phase component and does not affect the alternating current circuit 4 when the transformer 24 is interposed.

In the main circuit 12 thus configured, the power flow between the direct current circuit 2 and the alternating current circuit 4 and the power flow between the direct current circuit 2 and the electrical storage part 22 can be controlled independently in two directions by independently controlling the positive-phase power and the direct current power by the ON/OFF of the switching elements 30u, 30v, 30w, 30x, 30y, and 30z. Accordingly, by appropriately adjusting the distribution of the power flows, the power flow between the direct current circuit 2, the alternating current circuit 4, and the electrical storage part 22 can be controlled in three directions by one set of the power converter 20.

The main circuit 12 further includes a voltage sensor 40, a current sensor 41, voltage sensors 42r, 42s, and 42t, current sensors 43r, 43s, and 43t, a voltage sensor 44, and a current sensor 45.

The voltage sensor 40 detects a direct current voltage Vd of the direct current circuit 2 and inputs the detection result to the control circuit 14. In other words, the voltage sensor 40 detects the direct current voltage between the direct current terminals 20a and 20b.

The current sensor 41 detects a direct current Id of the direct current circuit 2 and inputs the detection result to the control circuit 14. In other words, the current sensor 41 detects the direct current flowing between the direct current terminals 20a and 20b.

The voltage sensors 42r, 42s, and 42t detect an alternating current voltage Va of the alternating current circuit 4 and input the detection result to the control circuit 14. More specifically, the phase voltages of the phases of the alternating current circuit 4 are detected. In other words, the voltage sensors 42r, 42s, and 42t indirectly detect the voltages of the alternating current terminals 20r, 20s, and 20t.

The current sensors 43r, 43s, and 43t detect an alternating current Ia of the alternating current circuit 4 and input the detection result to the control circuit 14. More specifically, the phase currents of the phases of the alternating current circuit 4 are detected. In other words, the current sensors 43r, 43s, and 43t indirectly detect the current flowing in the alternating current terminals 20r, 20s, and 20t.

In the example, the voltage sensors 42r, 42s, and 42t and the current sensors 43r, 43s, and 43t are provided at the alternating current circuit 4 side of the transformer 24. The current sensors 43r, 43s, and 43t may be provided at the power converter 20 side of the transformer 24.

The voltage sensor 44 detects a direct current voltage Vb of the electrical storage part 22 and inputs the detection result to the control circuit 14. The current sensor 45 detects a direct current Ib flowing in the electrical storage part 22 and inputs the detection result to the control circuit 14.

The control circuit 14 is connected to the control terminals of the switching elements 30u, 30v, 30w, 30x, 30y, and 30z via not-illustrated signal lines. The control circuit 14 controls the ON/OFF of the switching elements 30u, 30v, 30w, 30x, 30y, and 30z based on the detection results of the voltage sensors 40, 42r, 42s, 42t, and 44 and the current sensors 41, 43r, 43s, 43t, and 45. Thereby, as described above, the control circuit 14 arbitrarily controls the power flow in the three directions between the direct current circuit 2, the alternating current circuit 4, and the electrical storage part 22.

FIG. 2 is a block diagram schematically illustrating an example of the control circuit according to the first embodiment.

As illustrated in FIG. 2, the control circuit 14 includes an electrical storage part power detection circuit 50, a power control circuit (APR) 51, an adder 52, an alternating current positive-phase power detection circuit 53, a power control circuit (APR) 54, a dq reverse conversion circuit (dq⁻¹) 55, adders 56 and 57, and a three-phase PWM controller 58.

The detected value of the direct current voltage Vb of the electrical storage part 22 detected by the voltage sensor 44 and the detected value of the direct current Ib of the electrical storage part 22 detected by the current sensor 45 are input to the electrical storage part power detection circuit 50. The electrical storage part power detection circuit 50 calculates a direct current power Pb of the electrical storage part 22 based on the detected values that are input and inputs the calculation result to the power control circuit 51.

The three-phase sum of the instantaneous value of a current Ir flowing in the reactors 26r, 26s, and 26t is substantially equal to the direct current Ib. Accordingly, the direct current power Pb may be calculated from the direct current voltage Vb and the three-phase sum of the instantaneous value of the current Ir of the reactors 26r, 26s, and 26t. Also, the three-phase sum of the instantaneous value of an alternating current output current Ic of the power converter 20 is substantially equal to the direct current Ib. Accordingly, the direct current power Pb may be calculated from the direct current voltage Vb and the three-phase sum of the instantaneous value of the alternating current output current Ic of the power converter 20. Also, the direct current power Pb may be calculated by calculating the direct current circuit power from the direct current voltage Vd and the direct current Id and by subtracting the alternating current positive-phase active power detected value from the direct current circuit power.

The calculation result of the direct current power Pb of the electrical storage part 22 is input to the power control circuit 51, and an electrical storage part direct current power target value Pbref is input to the power control circuit 51. Based on the direct current power Pb and the electrical storage part direct current power target value Pbref that are input, the power control circuit 51 calculates direct current-portion correction values of the alternating current terminal voltages of the power converter 20 for causing the direct current power Pb to approach the electrical storage part direct current power target value Pbref, and inputs the calculation result to the adder 52.

The direct current-portion correction values of the alternating current terminal voltages of the power converter 20 is input to the adder 52, and the detected value of the direct current voltage Vb is input to the adder 52. By adding the correction value to the detected value of the direct current voltage Vb, the adder 52 generates a direct current voltage control signal and inputs the generated direct current voltage control signal to the adder 57.

The detected value of the alternating current voltage Va of the phases detected by the voltage sensors 42r, 42s, and 42t and the detected value of the alternating current Ia of the phases detected by the current sensors 43r, 43s, and 43t are input to the alternating current positive-phase power detection circuit 53. Based on the detected value of the alternating current voltage Va of the phases and the detected value of the alternating current Ia of the phases that are input, the alternating current positive-phase power detection circuit 53 calculates a reactive power Qa and an active power Pa of the positive-phase power of the alternating current circuit 4 and inputs the calculation result to the power control circuit 54.

The alternating current Ia may be an alternating current winding current or may be a direct current winding current of the transformer. Also, for example, the reactive power Qa and the active power Pa of the positive-phase power of the alternating current circuit 4 may be calculated based on the alternating current output current Ic of the power converter 20 and the alternating current voltage Va of the phases. Although the direct current is superimposed onto the alternating current output current Ic, the direct current can be removed by the alternating current positive-phase power detection circuit 53.

The active power Pa and the reactive power Qa that are calculated are input to the power control circuit 54, and a reactive power target value Qaref and an active power target value Paref of the alternating current positive-phase power of the alternating current circuit 4 are input to the power control circuit 54.

Based on the active power Pa and the active power target value Paref that are input, the power control circuit 54 calculates a q-axis voltage component correction value for causing the active power Pa to approach the active power target value Paref, and inputs the calculated correction value to the dq reverse conversion circuit 55.

Similarly, based on the reactive power Qa and the reactive power target value Qaref that are input, the power control circuit 54 calculates a d-axis voltage component correction value for causing the reactive power Qa to approach the reactive power target value Qaref, and inputs the calculated correction value to the dq reverse conversion circuit 55.

The correction values are input to the dq reverse conversion circuit 55, and the phase information of the phases of the alternating current voltage Va is input to the dq reverse conversion circuit 55. Based on the correction values and the phase information that are input, the dq reverse conversion circuit 55 calculates alternating current-portion correction values of the alternating current terminal voltages of the power converter 20 for causing the active power and the reactive power to approach the target values, and inputs the calculated correction values to the adder 56.

The alternating current-portion correction values of the alternating current terminal voltages of the power converter 20 are input to the adder 56, and the detected value of the alternating current voltage Va of the phases detected by the voltage sensors 42r, 42s, and 42t is input to the adder 56. By adding the correction values of the phases corresponding respectively to the detected value of the alternating current voltage Va of the phases, the adder 56 generates a three-phase alternating current voltage control signal and inputs the generated three-phase alternating current voltage control signal to an adder 57.

The adder 57 adds the direct current voltage control signal to the three-phase alternating current voltage control signal and inputs the voltage control signals of the phases after the addition to the three-phase PWM controller 58.

From the input voltage control signals, the three-phase PWM controller 58 generates the control signals of the switching elements 30u, 30v, 30w, 30x, 30y, and 30z of the power converter 20 and inputs the generated control signals to the control terminals of the switching elements 30u, 30v, 30w, 30x, 30y, and 30z. Thereby, the control circuit 14 controls the ON/OFF of the switching elements 30u, 30v, 30w, 30x, 30y, and 30z.

Thus, the control circuit 14 controls the alternating current terminal voltages of the power converter 20 to cause the direct current power Pb of the electrical storage part 22 and the positive-phase power of the alternating current circuit 4 to independently track their target values. Here, the alternating current-side direct current power of the power converter 20 is a zero-phase portion for the alternating current circuit 4 and is a power flow between the electrical storage part 22 without substantially affecting the alternating current circuit 4. On the other hand, the alternating current-side positive-phase power of the power converter 20 is a power flow between the alternating current circuit 4 without substantially affecting the electrical storage part 22 used as a zero-phase circuit. Accordingly, by one set of the power converter 20, it is possible to independently control the power flow between the alternating current circuit 4 and the power flow between the electrical storage part 22. The sum of the direct current power Pb of the electrical storage part 22 and the positive-phase power of the alternating current circuit 4 is substantially equal to the direct current power of the direct current circuit 2. Accordingly, by appropriately adjusting the distribution between the direct current power Pb of the electrical storage part 22 and the positive-phase power of the alternating current circuit 4, the power flow between the direct current circuit 2, the alternating current circuit 4, and the electrical storage part 22 can be arbitrarily controlled in three directions. The configuration of the control circuit 14 is not limited to the configuration recited above, and it is sufficient to be appropriately selected according to the configuration of the main circuit 12, etc.

FIG. 3A to FIG. 3D and FIG. 4A to FIG. 4E are graphs schematically illustrating an example of simulation results of the power conversion system according to the first embodiment.

The vertical axis of FIG. 3A is the alternating current voltage Va of the phases of the alternating current circuit 4. The vertical axis of FIG. 3B is the alternating current Ia of the phases of the alternating current circuit 4.

The vertical axis of FIG. 3C is the current Ir of the reactors 26r, 26s, and 26t.

The vertical axis of FIG. 3D is the alternating current output current Ic of the power converter 20.

The vertical axis of FIG. 4A is the direct current Ib of the electrical storage part 22 and the direct current Id of the direct current circuit 2.

The vertical axis of FIG. 4B is the direct current voltage Vb of the electrical storage part 22 and the direct current voltage Vd of the direct current circuit 2.

The vertical axis of FIG. 4C is the alternating current positive-phase power.

The vertical axis of FIG. 4D is the direct current power of the electrical storage part 22.

The vertical axis of FIG. 4E is the direct current power of the direct current circuit 2.

In each of FIG. 3A to FIG. 3D and FIG. 4A to FIG. 4E, the horizontal axis is time.

Also, the polarities of the current and the voltage in the simulation are according to FIG. 1.

In the simulation, in the period of 1.2 seconds to 1.3 seconds, 250 kW is discharged from the electrical storage part 22, and 250 kW is output to the alternating current circuit 4 side. The electrical power of the direct current circuit 2 is substantially zero in this period.

Also, in the period of 1.4 seconds to 1.5 seconds, 500 kW is input from the direct current circuit 2, 250 kW is charged to the electrical storage part 22, and 250 kW is output to the alternating current circuit 4.

Also, in the period of 1.6 seconds to 1.7 seconds, 250 kW is input from the alternating current circuit 4, and 250 kW is charged to the electrical storage part 22. The electrical power of the direct current circuit 2 is substantially zero in this period. Then, in the period of 1.8 seconds to 1.9 seconds, 250 kW is input from the alternating current circuit 4, 250 kW is discharged from the electrical storage part 22, and 500 kW is output to the direct current circuit 2.

In the simulation as illustrated in FIG. 3A to FIG. 3D and FIG. 4A to FIG. 4E, it can be seen that the alternating current positive-phase power and the direct current power of the electrical storage part 22 independently track their target values, and the power flow between the direct current circuit 2, the alternating current circuit 4, and the electrical storage part 22 can be controlled in three directions.

Thus, by one set of the power converter 20 in the power conversion system 10 according to the embodiment, the power flow between the direct current circuit 2, the alternating current circuit 4, and the electrical storage part 22 can be controlled in three directions. Accordingly, in the power conversion system 10, for example, compared to the case where two sets of converters are used, one set of the converters can be omitted, and the configuration can be simple. In the power conversion system 10, for example, compared to the case where two sets of converters are used, the device can be downsized. In the power conversion system 10, for example, the manufacturing cost can be reduced.

FIG. 5 is a block diagram schematically illustrating a modification of the power conversion system according to the first embodiment.

In the power conversion system 10a as illustrated in FIG. 5, the power converter 20 includes two alternating current terminals 20c and 20d, four switching elements 30a to 30d, and four rectifying elements 32a to 32d. Only the main circuit 12 is illustrated for convenience in FIG. 5. Also, components that are substantially the same functionally and configurationally as those of the embodiments recited above are marked with the same reference numerals, and a detailed description is omitted.

The switching elements 30a to 30d have a full-bridge connection. The rectifying elements 32a to 32d are connected in anti-parallel to the switching elements 30a to 30d. Also, in the power converter 20, the connection point of the switching elements 30a and 30c connected in series is one alternating current terminal 20c; the connection point of the switching elements 30b and 30d connected in series is the other alternating current terminal 20d. In other words, in the example, the power converter 20 is a so-called single-phase inverter. In the example, the alternating current power of the alternating current circuit 4 is single-phase alternating current power. Thus, the alternating current power of the alternating current circuit 4 and the power converter 20 may be single-phase alternating current power.

FIG. 6 is a block diagram schematically illustrating a modification of the power conversion system according to the first embodiment.

In the power conversion system 10b as illustrated in FIG. 6, the main circuit 12 includes the multiple power converters 20 and the multiple electrical storage parts 22. The electrical storage parts 22 are connected to the alternating current terminals 20r, 20s, and 20t of each of the power converters 20 via the reactors 26r, 26s, and 26t. Also, in the power conversion system 10b, the transformer 24 provides a parallel multiple connection of the power converters 20 to the alternating current circuit 4.

Thus, the multiple power converters 20 and the multiple electrical storage parts 22 may be provided, and the power converters 20 may have a parallel multiple connection to the alternating current circuit 4. Thereby, for example, the output of the power conversion system 10b can be increased while reducing the rated voltage or the rated current of the switching elements. Also, the harmonics outflowing to the alternating current circuit 4 can be reduced by improving the equivalent switching frequency.

In the example, by using a three-phase three-winding transformer as the transformer 24, the power converters 20 have a parallel multiple connection to the alternating current circuit 4. This is not limited thereto; for example, the power converters 20 may have a parallel multiple connection to the alternating current circuit 4 by using two sets of three-phase two-winding transformers as the three-phase three-winding transformer. The configuration of the transformer 24 may be any configuration capable of providing a parallel multiple connection of the power converters 20 to the alternating current circuit 4.

FIG. 7 is a block diagram schematically illustrating a modification of the power conversion system according to the first embodiment.

In the power conversion system 10c as illustrated in FIG. 7, the transformer 24 provides a series multiple connection of the power converters 20 to the alternating current circuit 4. Thus, when the multiple power converters 20 and the multiple electrical storage parts 22 are provided, the power converters 20 may have a series multiple connection to the alternating current circuit 4. In such a case, the configuration of the transformer 24 may be any configuration capable of providing a series multiple connection of the power converters 20 to the alternating current circuit 4.

In the power conversion system 10b and the power conversion system 10c, two sets of the power converters 20 have a multiple connection to the alternating current circuit 4. The number of the power converters 20 having the multiple connection to the alternating current circuit 4 is not limited to two and may be three or more.

In the power conversion system 10b and the power conversion system 10c, the power converters 20 are connected to one direct current circuit 2. In other words, the direct current terminals 20a and 20b of the power converters 20 are connected in parallel. This is not limited thereto; for example, multiple direct current circuits 2 may be connected to each of the multiple power converters 20. In the power conversion system 10b and the power conversion system 10c, the power flow between the multiple direct current circuits 2, the alternating current circuit 4, and the multiple electrical storage parts 22 may be able to be controlled arbitrarily.

FIG. 8 is a block diagram schematically illustrating a modification of the power conversion system according to the first embodiment.

In the power conversion system 10d as illustrated in FIG. 8, the negative pole 22b of the electrical storage part 22 is connected to the alternating current terminals 20r, 20s, and 20t via the reactors 26r, 26s, and 26t. Also, the positive pole 22a of the electrical storage part 22 is connected to the direct current terminal 20a at the high potential side of the power converter 20.

Thus, the electrical storage part 22 may be connected between the alternating current terminals 20r, 20s, and 20t and the direct current terminal 20a at the high potential side of the power converter 20, or may be connected between the alternating current terminals 20r, 20s, and 20t and the direct current terminal 20b at the low potential side of the power converter 20.

### (Second embodiment)

FIG. 9 is a block diagram schematically illustrating a power conversion system according to a second embodiment.

In the power conversion system 100 as illustrated in FIG. 9, the transformer 24 includes three primary windings 24r, 24s, and 24t corresponding to the phases of the alternating current circuit 4, and includes three secondary windings 24u, 24v, and 24w magnetically coupled respectively with the primary windings 24r, 24s, and 24t. In the example, transformer 24 is a so-called three-phase transformer. In FIG. 9, the control circuit 14, etc., are not illustrated for convenience.

The power converter 20 includes the three alternating current terminals 20r, 20s, and 20t corresponding to the phases of the alternating current circuit 4. The transformer 24 is provided between the power converter 20 and the alternating current circuit 4. One end of each of primary windings 24r, 24s, and 24t is connected respectively to the alternating current terminals 20r, 20s, and 20t. The other end of each of the primary windings 24r, 24s, and 24t is connected to the positive pole 22a of the electrical storage part 22. In other words, in the transformer 24 of the example, the primary windings 24r, 24s, and 24t have a Y-connection, and are connected respectively to the alternating current terminals 20r, 20s, and 20t; the neutral point of the primary windings 24r, 24s, and 24t is connected to the positive pole 22a of the electrical storage part 22.

The secondary windings 24u, 24v, and 24w have a Δ-connection and are connected to the alternating current circuit 4. The connection points of the secondary windings 24u, 24v, and 24w having the Δ-connection are connected to the phases of the alternating current circuit 4.

Thus, in the power conversion system 100 according to the embodiment, the primary windings 24r, 24s, and 24t of the transformer 24 having the Y-connection are used as the reactors. Thereby, in the power conversion system 100, the reactors 26r, 26s, and 26t can be omitted, and the configuration can be simpler compared to the power conversion system 10 of the first embodiment recited above. For example, the device can be smaller, and the manufacturing cost can be reduced further.

A parallel multiple configuration or a series multiple configuration of the multiple power converters 20 and the multiple electrical storage parts 22 also is possible in the configuration of the power conversion system 100.

### (Third embodiment)

FIG. 10 is a block diagram schematically illustrating a power conversion system according to a third embodiment.

In the power conversion system 110 as illustrated in FIG. 10, the main circuit 12 further includes a core 28. The control circuit 14, etc., are not illustrated for convenience in FIG. 10.

The core 28 is used commonly in the reactors 26r, 26s, and 26t. The reactors 26r, 26s, and 26t each are wound around the core 28. For example, a magnetic material such as iron or the like is used as the core 28. The core 28 is a so-called iron core. In other words, in the example, the reactors 26r, 26s, and 26t are iron-core three-phase reactors.

Thus, the power conversion system 110 according to the embodiment has a three-phase configuration in which the core of the three reactors 26r, 26s, and 26t is shared. Thereby, the positive-phase impedance can be greater than the zero-phase impedance for the reactors 26r, 26s, and 26t. It is favorable for the positive-phase impedance to be, for example, about 10 times (not less than 5 times and not more than 20 times) the zero-phase impedance for the reactors 26r, 26s, and 26t.

A thee-phase alternating current (a reactive power component) flows in the reactors 26r, 26s, and 26t because the power converter 20 outputs a three-phase alternating current voltage. On the other hand, the current of the electrical storage part 22 is the zero-phase component. For example, by setting the zero-phase impedance of the reactors 26r, 26s, and 26t having the three-phase configuration to the same value as the power conversion system 10 of the first embodiment and by setting the positive-phase impedance to 10 times the zero-phase impedance, the alternating current of the reactors 26r, 26s, and 26t can be reduced to 1/10 of that of the first embodiment while maintaining the direct current of the electrical storage part 22 at substantially the same value as that of the first embodiment. The reactive power output of the power converter 20 can be suppressed thereby, and the device capacity can be reduced.

It is possible to provide a parallel multiple configuration or a series multiple configuration of the multiple power converters 20 and the multiple electrical storage parts 22 in the configuration of the power conversion system 110 as well. Also, in the configuration of the power conversion system 110, the alternating current power of the alternating current circuit 4 may be single-phase alternating current power. The power converter 20 may be a single-phase inverter.

According to the embodiments, a power conversion system that has a simple configuration is provided.

Hereinabove, embodiments of the invention are described with reference to specific examples. However, the embodiments of the invention are not limited to these specific examples. For example, one skilled in the art may similarly practice the invention by appropriately selecting specific configurations of components such as the main circuit, the control circuit, the power converter, the electrical storage part, the direct current terminal, the alternating current terminal, the switching element, the rectifying element, the reactor, the positive pole, the negative pole, the transformer, the primary winding, the secondary winding, the core, etc., included in the power conversion system from known art; and such practice is within the scope of the invention to the extent that similar effects can be obtained.

Also, combinations of any two or more components of the specific examples within the extent of technical feasibility also are within the scope of the invention to the extent that the spirit of the invention is included.

Furthermore, all power conversion systems practicable by an appropriate design modification by one skilled in the art based on the power conversion systems described above as embodiments of the invention also are within the scope of the invention to the extent that the spirit of the invention is included.

Moreover, various modifications and alterations within the spirit of the invention will be readily apparent to those skilled in the art, and all such modifications and alterations should be seen as being within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A power conversion system, comprising:
a main circuit including
a power converter including a pair of direct current terminals, a plurality of alternating current terminals, a plurality of switching elements having a full-bridge connection, and a plurality of rectifying elements connected in anti-parallel respectively to the plurality of switching elements, the pair of direct current terminals being connected to a direct current circuit, the plurality of alternating current terminals being connected to an alternating current circuit, and
an electrical storage part connected to each of the plurality of alternating current terminals via a plurality of reactors and connected to one of the pair of direct current terminals; and
a control circuit controlling, by an ON/OFF of the plurality of switching elements, a power flow in three directions between the direct current circuit, the alternating current circuit, and the electrical storage part.

2. The power conversion system according to claim 1, wherein the control circuit controls the power flow in the three directions between the direct current circuit, the alternating current circuit, and the electrical storage part by controlling an alternating current terminal voltage of the power converter to independently track target values of each of a direct current power of the electrical storage part and a positive-phase power of the alternating current circuit.

3. The power conversion system according to claim 1, wherein
the main circuit includes:
a plurality of the power converters;
a plurality of the electrical storage parts connected to the plurality of alternating current terminals of each of the plurality of power converters via the plurality of reactors; and
a transformer providing a parallel multiple connection of the plurality of power converters to the alternating current circuit.

4. The power conversion system according to claim 1, wherein
the main circuit includes:
a plurality of the power converters;
a plurality of the electrical storage parts connected to the plurality of alternating current terminals of each of the plurality of power converters via a reactor; and
a transformer providing a series multiple connection of the plurality of power converters to the alternating current circuit.

5. The power conversion system according to claim 1, wherein
an alternating current power of the alternating current circuit is three-phase alternating current power,
the power converter includes three of the alternating current terminals corresponding to the phases,
the main circuit includes a transformer provided between the power converter and the alternating current circuit,
the transformer includes:
three primary windings provided to correspond to the phases and connected respectively to the three alternating current terminals; and
three secondary windings magnetically coupled respectively with the three primary windings and connected to the alternating current circuit,
the three primary windings have a Y-connection, and
the electrical storage part is connected to a neutral point of the three primary windings having the Y-connection and uses the three primary windings as the plurality of reactors.

6. The power conversion system according to claim 1, wherein the main circuit further includes a core having each of the plurality of reactors wound around the core.

7. The power conversion system according to claim 1, wherein the electrical storage part includes a positive pole connected to each of the plurality of alternating current terminals via the plurality of reactors, and a negative pole connected to the direct current terminal of the pair of direct current terminals on a low potential side.

8. The power conversion system according to claim 1, wherein the electrical storage part includes a negative pole connected to each of the plurality of alternating current terminals via the plurality of reactors, and a positive pole connected to the direct current terminal of the pair of direct current terminals on a high potential side.
